# FASCICULE DE BREVET EUROPEEN

(11) **EP 1 200 883 B1**
(45) Date de publication et mention de la délivrance du brevet: **09.11.2005**
(21) Numéro de dépôt: 01936590.7
(22) Date de dépôt: 18.05.2001
(51) Int. Cl.: G05B 19/042

(54) **APPAREILS ELECTRIQUES ET SYSTEME DESTINES A ACCOMPLIR AU MOINS UNE ACTION LIEE A UN REPERAGE DANS LE TEMPS**
ELEKTRISCHE VORRICHTUNGEN UND SYSTEM ZUR DURCHFÜHRUNG MINDESTENS EINER AKTION ZU EINER VORBESTIMMTEN ZEIT
ELECTRICAL APPLIANCES AND SYSTEM FOR PERFORMING AT LEAST AN ACTION RELATED TO A TIME MARK

(30) Priorité: 19.05.2000 FR 0006446
(43) Date de publication de la demande: 02.05.2002
(73) Titulaire: LEGRAND, 87000 Limoges (FR); LEGRAND SNC, 87000 Limoges (FR)
(72) Inventeur: JARASSE, Jean-Luc, F-87000 Limoges (FR); TARRADE, Gérard, F-87100 Limoges (FR)
(74) Mandataire: Santarelli
(86) Numéro de dépôt international: PCT/FR2001/001543
(87) Numéro de publication internationale: WO 2001/088645

(56) Documents cités:
- WO-A-98/30941
- GB-A- 2 060 953
- US-A- 5 805 530

## Description

La présente invention concerne les appareils électriques qui réalisent au moins une action liée à un repérage dans le temps. L'action en question peut être une manifestation telle que l'activation de contacts électriques, la transmission d'un signal, l'enregistrement d'un événement avec repérage dans le temps de ce dernier, etc., ainsi qu'une gestion interne de divers organes, par exemple pour un paramétrage temporel vis-à-vis d'une référence externe.

Dans l'exemple non-limitatif de la présente description, l'action considérée se trouve être l'activation et la désactivation de contacts électriques en fonction de plages horaires programmées. Dans ce cas, chaque appareil constitue un commutateur - à simple ou multiples sortie(s) - programmé pour activer la ou les sortie(s) à des heures choisies, par exemple pour fournir et interrompre une alimentation vers des postes branchés sur les sorties (prises de courant, alarmes, systèmes de sécurité, etc.) selon les moments du jour.

Lorsque l'on envisage de réaliser un ensemble comportant plusieurs appareils du type précité, deux conceptions principales peuvent être envisagées :
- soit chaque appareil est complètement autonome en ce qui concerne à la fois l'entrée, la gestion de données temporelles et la mesure du temps, afin de pouvoir fonctionner de manière totalement indépendante ; ceci est le cas notamment avec les commutateurs programmables du type électromécanique ou électronique qui intègrent une prise gigogne destinée à se brancher sur une prise de courant ;
- soit chaque appareil dépend d'un poste central pour recevoir des commandes de commutation, par exemple au moyen d'une liaison filaire, infrarouge ou radio, en fonction d'une programmation réalisée et gérée par le poste central ; l'appareil est dans ce cas simplement un organe télécommandé d'exécution de fonctions (par exemple de commutation), dépourvu de moyens internes de gestion et de mesure du temps.

Dans le premier cas, on s'affranchit de moyens de communication de données temporelles nécessaires lorsque l'on met en oeuvre un système centralisé, mais moyennant les inconvénients suivants. D'une part, il est nécessaire de prévoir pour chaque appareil des moyens propres de mesure du temps qui, pour maintenir une précision adéquate sur des périodes raisonnables, doivent être précis. On prévoit à cette fin des bases de temps réalisées à partir d'oscillateurs spécifiques pilotés par quartz, associés à des moyens de programmation, de mise à l'heure et d'affichage. Or, dans un ensemble comportant un nombre relativement important d'appareils, la démultiplication de tels moyens grève sur le prix et augmente considérablement la complexité du système. Par ailleurs, la décentralisation de la base de temps et de la programmation rendent la gestion du système plus difficile. Il faut en effet prévoir une présence locale pour une programmation, et le maintien de la synchronisation des bases de temps individuelles requiert des remises à l'heure régulières au niveau de chaque appareil.

Qui plus est, lorsque cette approche est mise en oeuvre dans un ensemble modulaire regroupé dans un espace limité, par exemple dans une enveloppe contenant divers modules, certains au moins des modules étant des appareils du type précité, la démultiplication des circuits de base de temps, d'affichage et d'interface d'entrée de programmation augmente sensiblement l'encombrement.

Dans le second cas, les appareils sont totalement tributaires du poste central pour pouvoir effectuer une action avec un repérage dans le temps. Il en résulte une fiabilité inférieure par rapport au premier cas en ce sens qu'une avarie au niveau du poste central peut empêcher le fonctionnement de tous les appareils qui en dépendent. Par ailleurs, s'il se produisait une perturbation sur le lien de communication entre le poste central et l'un ou plusieurs des appareils, ces derniers ne pourraient plus assurer leurs fonctions correctement. Or, de telles perturbations ne sont pas rares, celles-ci pouvant être occasionnées par des signaux parasites (causant une action manquée, ou provoquée de manière intempestive) ou des ruptures de communication. Ces perturbations peuvent être présentes de manière constante sur une longue durée, ou occasionnelles et aléatoires, ce qui est le cas par exemple avec certains bruits parasites sur la liaison entre le poste central et les appareils.

On connaît par WO 98 30941 A un appareil électroménager muni d'un système de commande comportant une mémoire dans une première zone de laquelle sont stockées les données nécessaires pour effectuer les fonctions de base et une deuxième zone dans laquelle sont stockés des données et programmes permettant à cet appareil d'effectuer des fonctions additionnelles en fonction de données provenant d'un dispositif externe tel qu'un micro-ordinateur ou une télécommande. Une fonction additionnelle concerne la remise à l'heure de l'horloge de l'appareil après une coupure de courant, qui s'effectue en entrant une simple instruction sur le micro-ordinateur ou en pressant un bouton approprié de la télécommande.

On connaît déjà par GB 2 060 953 A un interrupteur horaire qui comprend :
- des moyens de réception et d'enregistrement de données temporelles de programmation, émises sous forme de signaux ;
- des moyens d'exécution permettant la réalisation d'une action liée à un repérage dans le temps en fonction desdites données temporelles de programmation ;
- des moyens de réception de données de synchronisation, émises sous forme de signaux, permettant d'établir une synchronisation avec une référence temporelle externe ; et
- des moyens de mesure du temps, référencés à partir desdites données de synchronisation, permettant de fournir un repérage dans le temps auxdits moyens d'exécution ;
dans lequel lesdits moyens de réception de données temporelles de programmation et lesdits moyens de réception de données de synchronisation comportent un même élément récepteur de signaux.

Cet l'appareil peut fonctionner en mode autonome, disposant de son propre programme et de ses propres moyens d'exécution d'actions et de mesure du temps, tout en permettant de se synchroniser par signaux sur une référence temporelle externe.

L'invention vise à permettre, lorsque plusieurs tels appareils sont dépendants d'une source commune de programmation, de mettre en mode de réception de données de programmation seulement l'appareil choisi.

L'appareil selon l'invention se caractérise en ce qu'il comporte en outre des moyens de mise en mode de programmation, dans lequel les moyens de réception et d'enregistrement de données temporelles de programmation sont actifs, et des moyens de mise hors de mode de programmation, dans lequel les moyens de réception et d'enregistrement de données temporelles de programmation sont inactifs, lesdits moyens de mise en mode de programmation et lesdits moyens de mise hors de mode de programmation comportant des moyens d'interface avec un utilisateur.

Ainsi, les données de programmation peuvent être transmises vers tous les appareils de l'ensemble, c'est-à-dire non sélectivement, sans perturber l'état des appareils non sélectionnés. Il est alors possible de s'affranchir de la nécessité de spécifier un appareil désigné au niveau de la source de données de programmation (comme on le ferait au moyen d'une adresse propre à un appareil).

L'appareil peut néanmoins, pour des raisons de convenance, comprendre des moyens de présentation d'une identité établie lors d'une phase de programmation.

Avantageusement, l'appareil comprend un oscillateur servant à la fois de source de signaux de cadencement pour les moyens d'exécution et de source de signal périodique pour les moyens de mesure du temps.

Il peut alors comprendre des moyens de comptage de cycles du signal périodique permettant le calcul de l'évolution du temps en unités prédéterminées (par exemple heures et minutes) à partir de données de synchronisation acquises antérieurement.

Les moyens de mesure du temps peuvent être configurés pour se synchroniser à chaque réception de données de synchronisation.

Les moyens d'exécution peuvent comporter des moyens d'activation et de désactivation de contacts électriques, par exemple sous forme d'au moins un commutateur permettant l'ouverture et la fermeture de contacts électriques.

Dans le mode de réalisation décrit, l'appareil se présente sous forme de module prévu pour une fixation amovible dans une enveloppe.

Egalement dans le mode de réalisation, l'élément récepteur de signaux est sensible à un rayonnement infrarouge.

Dans ce cas, il est possible de prévoir que l'élément récepteur est tourné vers une paroi de l'enveloppe afin de recevoir une énergie lumineuse réfléchie par cette dernière.

L'invention vise également un appareil (module maître) destiné à transmettre des données temporelles de programmation et des données de synchronisation vers un appareil précité (module esclave), caractérisé en ce qu'il comprend :
- des moyens d'entrée de données de programmation temporelles ;
- des moyens d'élaboration et de transmission de signaux correspondant aux données temporelles de programmation ;
- des moyens formant horloge ; et
- des moyens d'élaboration et de transmission de signaux correspondant aux données de synchronisation à partir de données fournies par les moyens formant horloge, les données de synchronisation étant transmises à intervalles régulier ;
dans lequel lesdits moyens de transmission de signaux correspondant aux données temporelles de programmation et lesdits moyens de transmission de signaux correspondant aux données de synchronisation comportent un même élément émetteur de signaux ;
l'appareil étant configuré pour fonctionner selon un premier mode dans lequel il est actif pour permettre l'entrée de données de programmation temporelles et la transmission de signaux correspondant aux données de programmation, et selon un deuxième mode dans lequel il est actif pour permettre la transmission de signaux correspondant aux données de synchronisation, par sélection grâce à une interface utilisateur.

De préférence, les moyens permettant l'entrée de données de programmation temporelles sont configurés pour permettre d'introduire une succession de telles données à la chaîne, l'ensemble de celles-ci étant destiné à un module esclave spécifique.

Les données de programmation temporelles comprennent de préférence au moins une donnée relative à un moment de début d'action et une donnée relative à un moment de fin d'action.

Les données de programmation temporelles et les données de synchronisation sont avantageusement élaborées sous forme de trames réparties en champs selon une structure commune.

De préférence, l'appareil comprend des moyens de mémorisation d'une identité d'un module esclave associé à une programmation affectée à cet appareil.

Dans le mode de réalisation envisagé, les données de synchronisation correspondent à des unités de temps instantané (par exemple heure, minutes, secondes).

Avantageusement, l'intervalle de temps séparant les transmissions consécutives des données de synchronisation peut être sensiblement égal à un pas élémentaire dans la résolution des données de programmation.

L'appareil peut comprendre en outre des moyens d'exécution d'une action en fonction desdites données temporelles de programmation.

Il peut se présenter sous forme de module prévu pour une fixation amovible dans une enveloppe.

L'élément émetteur de signaux émet de préférence par un rayonnement infrarouge.

Il peut être tourné vers une paroi de l'enveloppe afin de transmettre vers cette dernière une énergie lumineuse pour réflexion vers au moins un module esclave.

L'invention concerne également un ensemble de programmation et gestion d'actions liées à un repérage dans le temps, caractérisé en ce qu'il comprend :
- au moins un module esclave ;
- au moins un module maître ; et
- des moyens de liaison permettant d'établir une liaison du premier appareil vers le deuxième appareil.

Avantageusement - notamment pour des raisons de simplicité de mise en oeuvre - la liaison est unidirectionnelle seulement.

Dans le mode de réalisation envisagé, au moins un module maître et au moins un module esclave sont logés dans une enveloppe commune.

La liaison du module maître vers le module esclave peut être réalisée par chemin optique, par exemple dans le spectre infrarouge, avec réflexion sur au moins une surface réfléchissante de l'enveloppe commune.

D'autres avantages et caractéristiques de l'invention apparaîtront plus clairement à la lecture de la description qui suit d'un mode de réalisation préféré, donnée purement à titre d'exemple non limitatif, à l'aide des dessins annexés dans lesquels :
- la figure 1 est un schéma bloc simplifié d'un appareil électrique programmé, dit "module esclave", destiné à accomplir au moins une action liée à un repérage dans le temps, conforme à la présente invention ;
- la figure 2 est un schéma simplifié d'une partie de la logique de traitement incorporée dans le module esclave de la figure 1 et permettant la mesure du temps ;
- la figure 3 est un schéma bloc simplifié d'un appareil d'établissement et de transmission de données de programmation et de synchronisation pour le module esclave, dit "module maître", conforme à la présente invention ;
- la figure 4 est une vue partielle et schématique d'un ensemble de modules esclaves et d'un module maître au sein d'une enveloppe ;
- la figure 5 est un organigramme représentant les étapes principales de la programmation d'un module esclave à partir d'un module maître ;
- la figure 6 est un schéma de principe représentant les différents champs constitutifs d'une trame dite "de configuration" émise par le module maître vers un module esclave lors d'un mode de programmation ;
- la figure 7 est un schéma de principe d'une trame dite "courante" émise par le module maître vers au moins un module esclave durant un mode de fonctionnement normal ; et
- la figure 8 est un organigramme représentant les étapes principales exécutées par un module esclave en mode de fonctionnement normal.

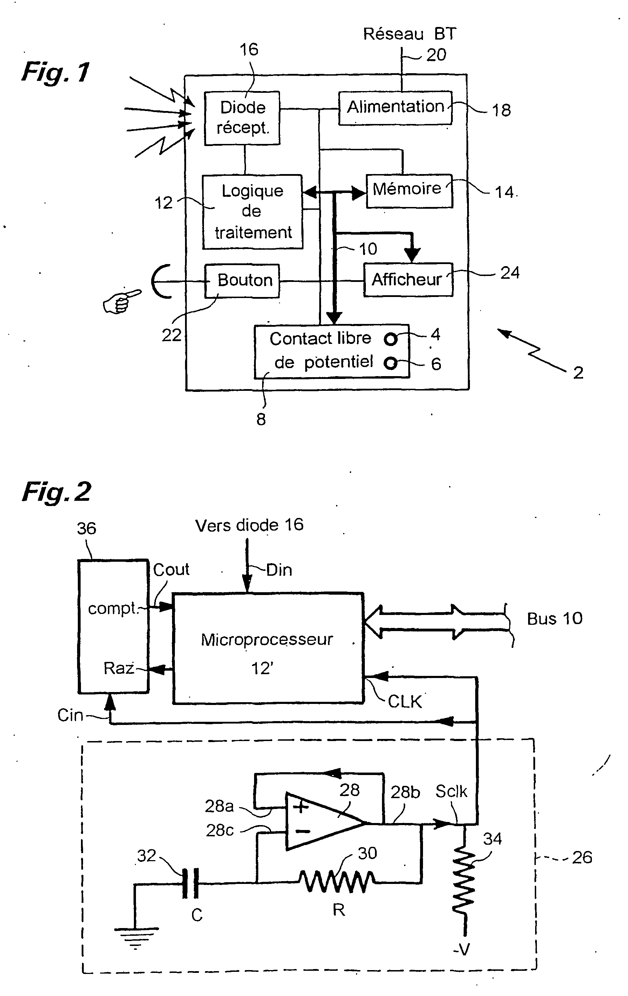

La figure 1 montre sous forme de schéma bloc un appareil électrique, dit "module esclave", destiné à établir ou à interrompre une liaison électrique entre deux bornes 4, 6 à des périodes programmées de la journée.

Un module esclave 2 peut être doté d'une seule paire de bornes 4, 6, comme dans le cas illustré, ou de plusieurs telles paires de bornes. Dans ce dernier cas, différentes paires de bornes peuvent être programmées sur des périodes indépendamment les unes des autres.

Quel que soit le type de connexion retenu pour les bornes 4, 6, celles-ci sont intégrées à un bloc 8 dit de "contact libre de potentiel" qui comporte les divers organes de commutation nécessaires, par exemple des relais. Ces organes permettent de réaliser la connexion ou la déconnexion des bornes 4, 6 à partir de signaux de commande transmis au contact libre de potentiel par un bus bidirectionnel 10. Ce bus 10 est commun à l'ensemble du module esclave 2 et permet en outre l'échange d'autres signaux de commande ou de données au sein de ce dernier.

Le module esclave 2 est géré par une logique de traitement 12 associée à une mémoire centrale 14. Cette dernière comporte une mémoire figée (ROM) contenant des données relatives aux aspects fixes du fonctionnement du dispositif 2, par exemple les codes de gestion interne des différents organes sous contrôle, et une mémoire vive (RAM) destinée à recevoir entre autres des données de programmation permettant la commande du bloc 8 contact libre de potentiel en fonction de données reçues de l'extérieur, comme il sera décrit plus loin.

On notera ici que la logique de traitement 12 et la mémoire centrale 14 fonctionnent de manière connue à partir de signaux binaires cadencés au moyen d'un oscillateur local.

Dans l'exemple, les données de programmation sont téléchargées par une liaison infrarouge au moyen d'une diode réceptrice 16. Il s'agit en l'occurrence d'une photodiode à amplification intégrée à haute immunité vis-à-vis de la lumière ambiante, accordée sur une fréquence de l'ordre de 950 nm et ayant une sensibilité de 0,2 à 0,4 milliwatt par mètre carré (mW/m²).

L'ensemble des organes précités 8-16 est alimenté par une unité de sortie de tension 18 reliée par l'extérieur à un réseau basse tension 20. En variante, l'unité de sortie de tension 18 peut être constituée par une batterie.

Le module esclave 2 comprend en outre des moyens d'interface avec un utilisateur qui, dans l'exemple, sont constitués par un commutateur à poussoir 22 et, à titre optionnel, d'un afficheur 24.

La figure 2 représente sous forme de schéma simplifié la partie principale de la logique de traitement 12, réalisée autour d'un microprocesseur 12' conformément à une architecture classique. Le microprocesseur 12' comporte une entrée de données Din qui, dans le cas envisagé, est une entrée de type série reliée à la diode réceptrice 16, éventuellement via un circuit d'interface (non représenté) permettant la mise en forme des signaux. Le microprocesseur 12' est par ailleurs relié au bus bidirectionnel 10 afin de pouvoir échanger des signaux avec la mémoire centrale 14 et avec le bloc 8 contact libre de potentiel en fonction de sa gestion interne et des données reçues de l'extérieur au moyen de l'entrée Din.

De manière connue, le microprocesseur 12' est cadencé par des signaux d'horloge Sclk fournis à une entrée CLK de ce dernier. Ces signaux permettent notamment de faire fonctionner la logique interne du microprocesseur 12', qui est du type synchrone.

Les signaux d'horloge Sclk sont produits par un circuit oscillateur spécifique 26 qui peut être soit interne, soit externe au microprocesseur 12'. Dans l'exemple de la figure 2, l'oscillateur est réalisé à partir d'un circuit ECL (logique à couplage d'émetteur) qui comprend un amplificateur opérationnel. L'entrée non-inverseuse (positive) 28a de l'amplificateur opérationnel 28 est reliée directement à la sortie 28b de ce dernier pour former un rebouclage positif. La sortie 28b de l'amplificateur opérationnel 28 est également rebouclée à l'entrée inverseuse (négative) 28c de ce dernier à travers une résistance 30 de valeur R. Le noeud commun de la résistance 30 et de l'entrée inverseuse 28c est également relié à une armature d'un condensateur 32 ayant une capacité C. L'autre armature du condensateur 32 est reliée à la masse.

Par ailleurs, la sortie 28b de l'amplificateur opérationnel est polarisée à une tension négative (par exemple de - 5,2 volts) à travers une résistance 34 ayant une valeur typique de 3,9 kOhms.

La fréquence f du signal oscillant Sclk, produit à la sortie 28b de l'amplificateur opérationnel 28, est approximativement égale à 0,32/RC. Les valeurs de R et de C sont choisies pour donner une fréquence f de l'ordre de 33 MHz.

On notera qu'il existe de nombreux types de circuits oscillants de différentes technologies de fabrication ou de conception qui sont aptes à produire des signaux d'horloge Sclk, et que le circuit représenté à la figure 2 n'est nullement limitatif.

Le microprocesseur 12' est associé à un circuit de comptage 36 configuré pour constituer une base de temps à partir des signaux Sclk de l'oscillateur 26. A cette fin, le circuit de comptage 36 présente une entrée de comptage Cin reliée au signal Sclk, et une sortie Cout de comptage qui produit une impulsion avec une périodicité T pour chaque nombre N d'impulsions du signal Sclk totalisées à l'entrée Cin. Autrement dit, T est égal à f/N. Ici, N est une valeur programmée en fonction de la fréquence f de l'oscillateur 26 de manière qu'une impulsion se produise régulièrement à la sortie Cout à un intervalle de temps prédéterminé, par exemple une fois par minute ou par fraction de minute (par exemple toutes les secondes).

Le microprocesseur 12' reçoit les impulsions précitées et les exploite pour comptabiliser l'écoulement du temps à partir d'une référence donnée. Ainsi, grâce aux impulsions produites par le circuit de comptage 36, le microprocesseur 12' peut remplir une fonction d'horloge enregistrant le temps, par exemple en heure de la journée (heure, minutes, secondes, ou heure, minutes seulement).

Le microprocesseur 12' comprend une sortie Raz de remise à zéro, reliée à une entrée correspondante du compteur 36, permettant à ce dernier d'une part d'interrompre son comptage de N impulsions en cours et d'autre part de recommencer simultanément le comptage de N nouvelles impulsions, et de continuer d'envoyer une impulsion après chaque comptage de N impulsions. Cette fonction de remise à zéro permet notamment de resynchroniser le compteur 36, et par là même l'horloge précitée, à partir d'un signal temporel extérieur reçu à partir de la diode de réception 16, comme il sera détaillé plus loin.

On comprendra que le compteur 36 n'est par forcément un circuit physiquement séparé du microprocesseur 12'. Il peut en effet être intégré au microprocesseur selon la disponibilité des fonctions internes de ce dernier. De même, la fonction horloge, c'est-à-dire la comptabilisation du temps, peut être réalisée en dehors du microprocesseur 12', soit par un circuit spécifique, soit par le compteur 36.

Dans le mode de réalisation décrit, une partie importante de la base de temps du module esclave 2 est constituée par l'oscillateur 26 qui est destiné au cadencement du microprocesseur 12'. Ainsi, peu - voire même pas - de composants supplémentaires sont nécessaires pour mettre en oeuvre cette base de temps.

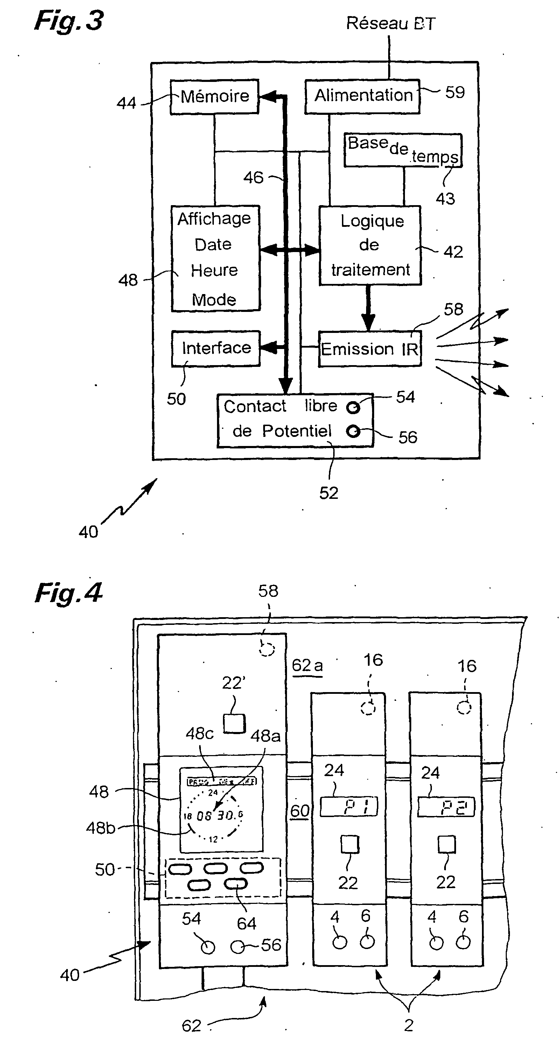

La figure 3 est un schéma bloc simplifié d'un appareil 40 d'entrée et de transmission des données de programmation et de synchronisation, apte à coopérer avec le module esclave 2 des figures 1 et 2. Cet appareil 40, qui sera désigné ci-après "module maître" ou "poste inter horaire", est destiné à établir et transmettre vers chaque module esclave 2 d'une part des données de programmation et d'autre part des données temporelles permettant une resynchronisation de leur horloge interne constituée par l'ensemble oscillateur 26, le compteur 36 et le microprocesseur 12'.

Le module maître 40 comporte une logique de traitement 42 conçue pour gérer les fonctions internes de ce dernier ainsi que la transmission des données de programmation et de synchronisation. Cette logique de traitement 42 est réalisée selon une architecture classique basée sur un microprocesseur ou un microcontrôleur. Elle est reliée à une mémoire centrale 44 via un bus bidirectionnel 46. La mémoire centrale 44 comporte une mémoire figée (ROM) contenant un programme fixe d'exécution de tâches préétablies pour la logique de traitement 42 et une mémoire vive programmable (RAM) destinée entre autres à stocker des données variables de programmation.

Le module maître 40 comporte également une base de temps 43 de précision supérieure à la base de temps du module esclave 2. Typiquement, la base de temps du module maître est réalisée à partir d'un oscillateur à haute fréquence, piloté par quartz. Il peut être éventuellement associé à des circuits de stabilisation contre des écarts de température.

La logique de traitement 42 et la mémoire centrale 44 sont par ailleurs reliées, au moyen du bus bidirectionnel 46, à un dispositif d'affichage 48, d'une interface utilisateur 50 et d'un bloc 52 "contact libre de potentiel". Dans l'exemple, ce dernier est fonctionnellement identique au bloc 8 "contact libre de potentiel" de la figure 1, et ne sera pas décrit à nouveau par souci de concision. On note que ce bloc 52 comporte également deux bornes 54 et 56 fonctionnellement équivalentes aux bornes 4 et 6 du bloc 8. De la sorte, le module maître 40 peut réaliser en outre les mêmes fonctions qu'un module esclave 2. La programmation et la commande du bloc 52 contact libre de potentiel sont sensiblement identiques à celles du module esclave 2, sauf que dans ce cas il est possible de gérer les temps d'activation et de désactivation du bloc 52 directement à partir de l'horloge 43 par câblage.

La logique de traitement 42 est également reliée à une interface de transmission de données qui, dans l'exemple, se présente sous la forme d'une diode d'émission infrarouge 58. Les caractéristiques d'émission de cette diode 58 sont adaptées aux caractéristiques de réception de la diode 16 de chaque module esclave 2 qui dépend du module maître. A titre indicatif, la diode 58 émet à une longueur d'onde de 950 nanomètres (nm), sous une puissance de 40 milliwatts par stéradian (mW/sr) et sous un angle d'émission compris entre 90° et 150°, par exemple 120°, l'émission se faisant en mode pulsé pour maximiser la portée avec une puissance acceptable.

L'ensemble des organes actifs précités est alimenté en tension par un bloc d'alimentation 59 relié à un réseau basse tension. Dans l'exemple illustré, il s'agit du réseau basse tension 20 représenté à la figure 1, le module maître étant destiné à être réuni avec un ou plusieurs appareils 16 dans une enveloppe commune, comme il sera expliqué plus loin.

La figure 4 représente une partie d'un groupement de modules esclaves 2 dépendant d'un module maître 40. Les modules esclaves 2 (dont deux seulement sont représentés) et le module maître 40 sont montés de façon amovible sur des rails 60 fixés à la structure d'une enveloppe 62. Cette dernière peut être une armoire, un boîtier, ou tout autre enceinte apte à intégrer des appareils électriques modulaires.

Dans le mode de réalisation représenté, le chemin optique entre la diode émettrice 58 du module maître 40 et les diodes réceptrices 16 des modules esclaves 2 pour la communication de données de programmation et de synchronisation comprend au moins une réflexion de l'énergie optique par une partie de l'enveloppe 62, par exemple la face arrière 62a ou des éléments de paroi latéral, supérieur ou inférieur. A cette fin, les diodes 58 et 16 sont placées en regard d'une portion réfléchissante de l'enveloppe, ici la paroi arrière 62a. Autrement dit, la communication ne dépend pas d'une visée directe du module maître 40 vers les différents modules esclaves 2. Cette disposition permet d'établir une communication avec un module esclave 2 où que se trouve ce dernier, soit sur le même rail 60 que le module maître 40, soit sur un autre rail.

L'affichage 48 du module maître 40 représenté à la figure 4 est un écran à cristaux liquides comportant d'une part un afficheur numérique 48a destiné à présenter les heures et minutes correspondant soit à l'heure actuelle, soit à une heure repère, et d'autre part des segments 48b disposés selon un cercle représentant un cadran de 24 heures. Les segments du cadran peuvent être activés (par exemple en étant mis en foncé) pour afficher au moins une plage horaire.

L'écran 48 comporte en outre un ou plusieurs afficheurs alphanumériques 48c qui permettent de visualiser, entre autres, un numéro affecté à un bloc 8, 52 contact libre de potentiel appartenant soit au module maître 40, soit à un module esclave 2. Ce numéro, dont le rôle est décrit plus loin, peut être spécifique soit à un module esclave 2, soit à un bloc 8, 52 dans le cas où l'appareil gère plusieurs blocs indépendamment les uns des autres.

L'interface utilisateur 50 présente un ensemble de boutons 64 permettant de programmer des plages horaires et de mettre à l'heure le module maître 40. Les plages horaires programmées correspondent à des périodes durant lesquelles est actif un bloc 8, 52 contact libre de potentiel désigné, celui-ci appartenant soit au module maître 40, soit à un module esclave 2 de l'ensemble.

Au niveau de chaque module esclave 2, le bouton 22 est accessible pour mettre ce dernier en mode de réception de données de programmation. Dans le mode de réalisation illustré, une première pression sur le bouton 22 d'un module esclave 2 sélectionné active le mode de réception de données, et une seconde pression sur ce bouton désactive ce mode. Il est possible de prévoir un afficheur (non représenté), par exemple sous forme de diode électroluminescente clignotante, permettant d'indiquer le fait que l'appareil est en mode de programmation. Cet afficheur peut éventuellement indiquer un numéro attribué à l'appareil.

Pour la programmation du bloc 52 contact libre de potentiel du module maître 40, l'activation du mode réception de données s'effectue par un bouton 22' sur la face avant.

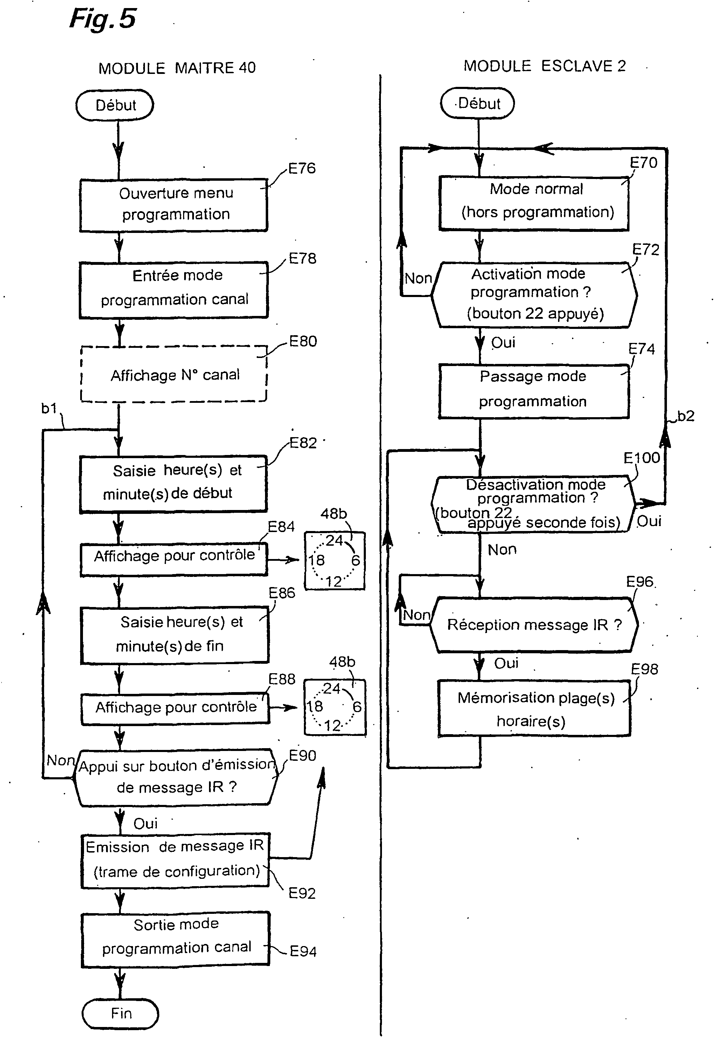

La programmation d'un module esclave 2 à partir du module maître 40 sera maintenant décrite par référence à l'organigramme de la figure 5. Cet organigramme est divisé en deux colonnes : les étapes spécifiques au module maître 40 et au module esclave 2 en cours de programmation sont représentées respectivement aux colonnes de gauche et de droite.

La programmation consiste à établir, à partir du module maître 40, au moins une plage horaire durant laquelle le bloc 8 contact libre de potentiel d'un module esclave 2 sélectionné doit être activé. On note que dans le cas général, la programmation permet de transférer des données horaires individuellement vers différents appareils dépendant du module maître, ces dernières pouvant être aussi par exemple des marquages horaires associés à un événement.

La phase de programmation est activée à partir d'un mode dit "normal" de fonctionnement, dans lequel le module maître 40 ainsi que les modules esclaves 2 sont en configuration d'exécution d'un programme.

Ainsi, au niveau du module esclave 2, l'état initial est d'abord au mode normal (étape E70). La logique de traitement 12 reste alors prête à détecter une première pression sur le bouton 22 (étape E72). Dès que l'on appuie sur celui-ci, l'appareil passe au mode de programmation (étape E74).

Au niveau du module maître 40, on commence par l'ouverture du menu de programmation (étape E76). Il apparaît alors sur l'écran d'affichage 48 un choix de modes possibles, dont le mode de programmation canal. On sélectionne ce mode (étape E78) par l'un des boutons 64 de l'interface utilisateur 50 (figure 4). Cette action met le module maître 40 dans le mode de programmation proprement dit.

Selon un mode de réalisation optionnel, le module maître affiche sur l'écran 48 un numéro de canal, qui peut être soit imposé selon une séquence par la logique de traitement 42, soit sélectionné par l'utilisateur (étape E80) : le caractère optionnel de cette étape est indiqué par les pointillées qui délimitent la case correspondante de l'organigramme. L'affectation d'un numéro de canal permet d'enregistrer au sein du module maître une relation biunivoque entre les données de programmation qui suivent et le module esclave 2 sélectionné pour recevoir ces données. A titre d'exemple, le numéro de canal peut être incrémenté d'une unité après chaque cycle complet de programmation d'un module esclave 2, de manière à attribuer automatiquement un nouveau numéro de canal au prochain module esclave 2 devant être programmé. En variante, ce numéro peut être sélectionné par l'utilisateur.

Le numéro de canal ainsi enregistré dans le module maître 40 peut être également inscrit au niveau du module esclave 2 correspondant, afin de permettre à l'utilisateur d'identifier ultérieurement celui des modules esclaves 2 qui correspond aux données de programmation associées à un canal donné. L'inscription du numéro de canal au niveau des modules esclaves 2 peut être réalisée par divers moyens. Elle peut être effectuée par exemple en apposant une étiquette portant le numéro de canal sur une partie visible de chaque module esclave, ou en écrivant le numéro directement sur ce dernier. En variante, on peut envisager de transmettre l'information relative au canal ainsi déterminé vers le module esclave 2 en cours de programmation afin que celui-ci l'enregistre en interne et puisse le cas échéant l'afficher, par exemple sur l'afficheur 24.

Une fois que le module maître 40 est mis en mode de programmation, avec affichage éventuel de numéro de canal, il se positionne en configuration de saisie de données de programmation. Dans le cas considéré, cette programmation consiste à inscrire une ou plusieurs plages horaires d'activation du bloc 8 contact libre de potentiel du module esclave 2 sélectionné. A cette fin, on procède d'abord à la saisie de l'heure et de la minute de début de la première plage à programmer (étape E82).

Une fois saisie, cette donnée est affichée pour contrôle sur l'écran 48 (étape E84).

Ensuite, on procède à la saisie de l'heure et de la minute de fin de la première plage à programmer (étape E86).

Cette opération étant terminée, l'écran 48 affiche pour contrôle la plage horaire correspondante, par exemple sous forme de segments activés sur l'affichage 48 heures 48b (étape E88).

Ensuite, le module maître 40 se met en configuration de détection d'une éventuelle nouvelle plage horaire à programmer pour le même module esclave 2, celui-ci pouvant gérer plusieurs plages horaires différentes.

Dans l'exemple, le module maître 40 se repositionne automatiquement sur l'étape de saisie d'une nouvelle heure de début (étape E82) - correspondant dans ce cas à une deuxième plage de programmation horaire - s'il ne détecte pas un ordre d'envoi des données programmées (rebouclage b1). De la sorte, il est possible d'enregistrer dans le module maître 40 une succession de plages horaires en définissant à la suite une concaténation d'heures et minutes de début et de fin.

Lorsque la saisie d'une ou de plusieurs plages horaires est terminée, l'utilisateur commande la transmission des données ainsi programmées vers le module esclave 2 ayant été préalablement activé pour acquitter et enregistrer ces données à l'étape E72 précitée (étape E90). Cette commande est effectuée en appuyant sur l'un des boutons 64 de l'interface utilisateur 50.

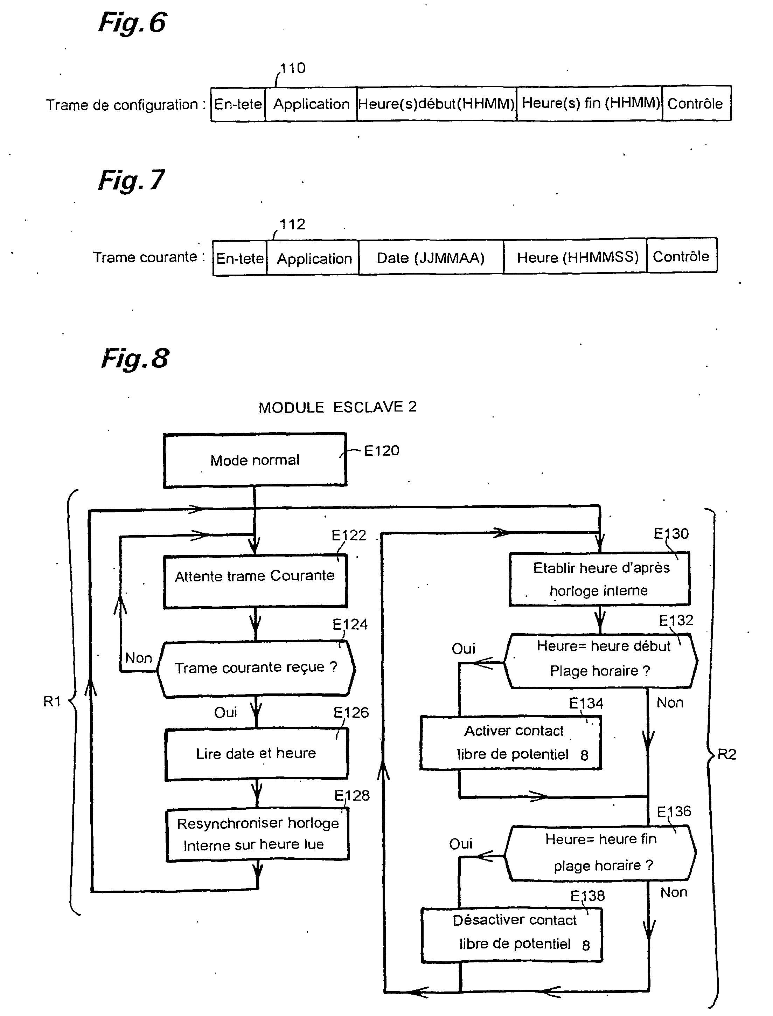

En réponse, la logique de traitement 42 du module maître 40 commande l'émission des données programmées au moyen de la diode infrarouge 58 (étape E92) et sort du mode programmation de canal (étape E94). Ces données sont structurées selon des trames spécifiques, dites trames de configuration, qui seront décrites plus loin par référence à la figure 6.

Au moment de la transmission des données par le module maître 40, le module esclave 2 se trouve dans une phase d'attente de message (étape E96) qui est successive au passage au mode programmation.

A la réception des données de programmation, le module esclave 2 enregistre ces dernières dans la mémoire centrale 14 (étape E98) de manière à pouvoir les exploiter en mode normal pour régir dans le temps les fonctions de son bloc 8 contact libre de potentiel.

Le module esclave 2 reste alors dans le mode programmation, pour attendre l'arrivée d'une éventuelle autre trame de données à enregistrer, jusqu'au moment où le mode de programmation au sein de l'appareil est désactivé, par une seconde pression du bouton 22 (étape E100).

Lorsque ce bouton est appuyé pour la seconde fois (la première étant à l'étape E72 précitée), le module esclave retourne au mode normal (rebouclage b2) dans lequel il exécute le programme ainsi chargé.

Ainsi, l'ensemble des opérations permet de sélectionner un module esclave 2 parmi une pluralité à programmer, de saisir et de visualiser des données de programmation au niveau du module maître et de télécharger ces données à l'appareil sélectionné.

La figure 6 représente schématiquement une trame de configuration 110 telle que transmise par le module maître 40 pour télécharger les données de programmation vers le module esclave 2. Dans l'exemple, chaque plage horaire programmée donne lieu à une trame de configuration correspondante. Ainsi, dans le cas d'une programmation de n plages horaires pour un module esclave 2, c'est-à-dire lorsqu'il s'effectue n-1 rebouclages b1 (figure 5), n trames de configuration 110 sont transmises lors de l'étape E92 d'émission de message IR.

Une trame de configuration 110 comporte un nombre de champs qui sont, dans l'ordre d'émission :
- un champ "En-tête" qui comporte des données d'initialisation des protocoles internes de gestion du module esclave 2, permettant notamment à ce dernier de reconnaître les données qui suivent ;
- un champ "Application" qui contient diverses données préliminaires, et notamment une indication de la nature de l'information contenue dans la trame, en l'occurrence le fait qu'il s'agit d'une trame de configuration ;
- un champ "Heure(s) début" qui spécifie l'heure et les minutes du début de la plage horaire ;
- un champ "Heure(s) fin" qui spécifie l'heure et les minutes de la fin de la plage horaire ; et
- un champ "Contrôle" qui permet de vérifier l'exactitude des données transmises, basé sur un algorithme classique.

Les trames de configuration 110 sont transmises sous forme de signaux numériques binaires selon un protocole préétabli. Dans l'exemple, chaque trame occupe 12 octets.

Lorsque le module maître 40 est en mode de fonctionnement normal, il transmet à intervalles réguliers, par exemple toutes les minutes, des données journalières et horaires à chacun des modules esclaves 2 qui en dépend. Ces données journalières sont élaborées à partir de la base de temps 43 interne au module maître 40.

Ainsi, chaque module esclave 2 peut se recaler périodiquement sur une base de temps plus précise pour d'une part éviter des dérives importantes dans le temps, et d'autre part rester synchronisés entre eux.

Les données journalières et horaires sont transmises sous forme de trames, dites "trames courantes".

La figure 7 représente schématiquement une trame courante 112 transmise par le module maître 40 en mode de fonctionnement normal.

La trame courante 112 comporte un nombre de champs qui sont, dans l'ordre d'émission :
- un champ "En-tête" qui comporte des données d'initialisation des protocoles internes de gestion du module esclave 2 récepteur, permettant notamment à ce dernier de reconnaître les données qui suivent ;
- un champ "Application" qui contient diverses données préliminaires, et notamment une indication de la nature de l'information contenue dans la trame, en l'occurrence le fait qu'il s'agit d'une trame courante ;
- un champ "Date" qui spécifie le jour, le mois et l'année en cours ;
- un champ "Heure" qui spécifie l'heure, les minutes et les secondes en cours ; et
- un champ "Contrôle" qui permet de vérifier l'exactitude des données transmises, basé sur un algorithme classique.

On remarque que la structure de la trame courante 112 est semblable à celle de la trame de configuration 110, notamment en ce qui concerne les champs "En-tête", "Application" et "Contrôle".

Il sera maintenant décrit par référence à la figure 8 les étapes principales de l'exécution du programme d'activation et de désactivation du bloc 8 contact libre de potentiel d'un des modules esclaves 2 dépendant d'un module maître 40, avec synchronisation sur les trames courantes 112.

On commence avec la mise du module esclave 2 en mode normal (étape E120). Dans ce mode, le module esclave 2 exécute deux routines en parallèle : une première routine R1 de lecture des trames courantes 112 afin de permettre de resynchroniser l'horloge interne et une seconde routine R2 de commande du bloc 8 contact libre de potentiel à partir de l'horloge interne. Ces deux routines R1 et R2 démarrent dès l'étape 120 de mise en mode normal.

La routine R1 commence avec l'attente de la prochaine trame courante 112 du module maître 40 (étapes E122 et E124). Dès qu'une trame courante 112 est reçue, celle-ci est transmise à partir de la diode réceptrice 16 vers la logique de traitement 12 de chaque module esclave 2. Les données concernant l'heure et les minutes - et éventuellement les données concernant la date - sont lues dans le champ correspondant (étape E126) et utilisées pour resynchroniser l'horloge interne (étape E128). Comme expliqué plus haut, cette resynchronisation consiste à effectuer une remise à zéro du compteur 36 (figure 2) et de recommencer ainsi la mesure du temps par l'horloge interne du module esclave 2 à partir des nouvelles données fournies par la trame courante 112.

La routine R2 de commande du bloc 8 contact libre de potentiel commence par l'établissement de l'heure d'après l'horloge interne du module esclave (étape E130). Selon le protocole interne utilisé, cette étape peut comporter un calcul et/ou une conversion d'un nombre de comptage du compteur 36 en des données horaires au même format que celui utilisé pour l'enregistrement des données de programmation.

L'heure établie d'après l'horloge interne est alors comparée avec une heure de début de plage horaire enregistrée dans la mémoire centrale 14 (étape E132). S'il y a concordance, le bloc 8 contact libre de potentiel est activé (étape E134).

Ensuite, l'heure établie d'après l'horloge interne est comparée avec une heure de fin de plage horaire enregistrée dans la mémoire centrale 14 (étape E136). S'il y a concordance, le bloc 8 contact libre de potentiel est désactivé (étape E138).

La routine R2 retourne alors à l'étape E130 d'établissement de l'heure d'après l'horloge interne afin de répéter l'ensemble des étapes E132 à E138.

On note que lorsqu'il n'y pas d'interruption dans la transmission des trames courantes 112, c'est-à-dire que celles-ci sont reçues régulièrement, la base de temps interne du module esclave 2 sert essentiellement de relais de données temporelles provenant du module maître 40. Il en résulte que la commande du bloc 8 contact libre de potentiel est régie avec la précision élevée de la base de temps 43 du module maître 40, sans qu'il soit pour autant nécessaire de réaliser matériellement une base de temps aussi précise au sein de chaque module esclave 2.

Lorsqu'il y a une rupture dans la transmission des trames courantes, faisant qu'une ou plusieurs trames courantes 112 ne sont pas émise ou reçues, les modules esclaves 2 peuvent néanmoins accomplir leurs tâches programmées en se référant à leur base de temps interne. Cette dernière, n'étant utilisée qu'en tant que moyen auxiliaire, peut être de conception relativement simple et donc moins coûteuse que la base de temps du module maître.

On comprendra que la présente invention se prête à de nombreuses variantes tout en restant dans le cadre des revendications.

Ainsi, le nombre de modules maître et esclaves mis en oeuvre dans une installation est arbitraire. Ces modules peuvent être regroupés dans une même enveloppe, ou éloignés les uns des autres.

Par ailleurs, la transmission des trames de programmation et/ou des trames courantes peut s'effectuer par tous moyens techniques appropriés : par liaison filaire, ondes hertziennes sur tout le spectre, ou par liaisons acoustiques.

Enfin, l'action liée à un repérage dans le temps peut être autre que l'activation et la désactivation de contacts. Il peut s'agir notamment de mémorisation de données temporelles, par exemple l'heure à laquelle un événement est détecté au sein d'un module esclave, celui-ci pouvant être équipé d'un ou de plusieurs capteurs de paramètres physiques ou électriques : détecteur de surtension (par exemple pour une fonction de parafoudre), de fumée, d'effraction, de température, d'éclairage, d'anomalie sur un système de communication de données, etc.

## Revendications

1. Appareil (2) destiné à accomplir au moins une action liée à un repérage dans le temps, comprenant :
- des moyens (12, 14, 16) de réception et d'enregistrement de données temporelles de programmation (110), émises sous forme de signaux ;
- des moyens d'exécution (12, 8) permettant la réalisation d'une action liée à un repérage dans le temps en fonction desdites données temporelles de programmation ;
- des moyens (12, 14, 16) de réception de données de synchronisation (112), émises sous forme de signaux, permettant d'établir une synchronisation avec une référence temporelle externe (43) ; et
- des moyens de mesure du temps (12', 26, 36), référencés à partir desdites données de synchronisation, permettant de fournir un repérage dans le temps auxdits moyens d'exécution (12, 8) ;
dans lequel lesdits moyens de réception de données temporelles de programmation (110) et lesdits moyens de réception de données de synchronisation (112) comportent un même élément récepteur de signaux (16) ;
ledit appareil étant **caractérisé en ce qu'**il comporte en outre des moyens de mise en mode de programmation, dans lequel les moyens de réception et d'enregistrement (12, 14, 16) de données temporelles de programmation (110) sont actifs, et des moyens de mise hors de mode de programmation, dans lequel les moyens de réception et d'enregistrement de données temporelles de programmation sont inactifs, lesdits moyens de mise en mode de programmation et lesdits moyens de mise hors de mode de programmation comportant des moyens d'interface (22) avec un utilisateur.

2. Appareil selon la revendication 1, **caractérisé en ce qu'**il comprend un oscillateur (26) servant à la fois de source de signaux de cadencement pour les moyens d'exécution (12, 8) et de source de signal périodique pour les moyens de mesure du temps (12', 26, 36).

3. Appareil selon la revendication 2, **caractérisé en ce qu'**il comprend des moyens (36) de comptage de cycles du signal périodique permettant le calcul de l'évolution du temps en unités prédéterminées (par exemple heures et minutes) à partir de données de synchronisation acquises antérieurement.

4. Appareil selon l'une quelconque des revendications 1 à 3, **caractérisé en ce que** les moyens de mesure du temps (12', 26, 36) sont configurés pour se synchroniser à chaque réception de données de synchronisation (112).

5. Appareil selon l'une quelconque des revendications 1 à 4, **caractérisé en ce que** les moyens d'exécution (8) comportent des moyens d'activation et de désactivation de contacts électriques.

6. Appareil selon la revendication 5, **caractérisé en ce que** les moyens d'exécution (8) comprennent au moins un commutateur permettant l'ouverture et la fermeture de contacts électriques.

7. Appareil selon l'une quelconque des revendications 1 à 6, **caractérisé en ce qu'**il se présente sous forme de module (2) prévu pour une fixation amovible dans une enveloppe (62).

8. Appareil selon l'une quelconque des revendications 1 à 7, **caractérisé en ce que** ledit élément récepteur de signaux (16) est sensible à un rayonnement infrarouge.

9. Appareil selon la revendication 8 prise en combinaison avec la revendication 7, **caractérisé en ce que** l'élément récepteur (16) est tourné vers une paroi (62a) de l'enveloppe (62) afin de recevoir une énergie lumineuse réfléchie par cette dernière.

10. Appareil selon l'une quelconque des revendications 1 à 9, **caractérisé en ce qu'**il comprend des moyens (24) de présentation d'une identité établie lors d'une phase de programmation.

11. Appareil (40) destiné à transmettre des données temporelles de programmation (110) et des données de synchronisation (112) vers un appareil (2) selon l'une quelconque des revendications 1 à 10, **caractérisé en ce qu'**il comprend :
- des moyens (42-50) d'entrée de données de programmation temporelles ;
- des moyens (58) d'élaboration et de transmission de signaux correspondant aux données temporelles de programmation ;
- des moyens formant horloge (43) ; et
- des moyens (58) d'élaboration et de transmission de signaux correspondant aux données de synchronisation à partir de données fournies par les moyens formant horloge, les données de synchronisation étant transmises à intervalles réguliers ;
- dans lequel lesdits moyens de transmission de signaux correspondant aux données temporelles de programmation (110) et lesdits moyens de transmission de signaux correspondant aux données de synchronisation (112) comportent un même élément émetteur de signaux (58) ;
ledit appareil étant configuré pour fonctionner selon un premier mode dans lequel il est actif pour permettre l'entrée de données de programmation temporelles et la transmission de signaux correspondant aux données de programmation (110), et selon un deuxième mode dans lequel il est actif pour permettre la transmission de signaux correspondant aux données de synchronisation (112), par sélection grâce à une interface utilisateur (50).

12. Appareil selon la revendication 11, **caractérisé en ce que** les moyens (42-50) permettant l'entrée de données de programmation temporelles (110) sont configurés pour permettre d'introduire une succession de telles données à la chaîne, l'ensemble de celles-ci étant destiné à un appareil spécifique selon l'une quelconque des revendications 1 à 10.

13. Appareil selon l'une quelconque des revendications 11 ou 12, **caractérisé en ce que** les données de programmation temporelles (110) comprennent au moins une donnée relative à un moment de début d'action et une donnée relative à un moment de fin d'action.

14. Appareil selon l'une quelconque des revendications 11 à 13, **caractérisé en ce que** les données de programmation temporelles et les données de synchronisation sont élaborées sous forme de trames (resp. 110, 112) réparties en champs selon une structure commune.

15. Appareil selon l'une quelconque des revendications 11 à 14, **caractérisé en ce qu'**il comprend des moyens de mémorisation d'une identité d'un appareil selon l'une quelconque des revendications 1 à 10 associé à une programmation affectée à cet appareil.

16. Appareil selon l'une quelconque des revendications 11 à 15, **caractérisé en ce que** les données de synchronisation correspondent à des unités de temps instantané (par exemple heure, minutes, secondes).

17. Appareil selon l'une quelconque des revendications 11 à 16, **caractérisé en ce que** l'intervalle de temps séparant les transmissions consécutives des données de synchronisation est sensiblement égal à un pas élémentaire dans la résolution des données de programmation.

18. Appareil selon l'une quelconque des revendications 11 à 17, **caractérisé en ce qu'**il comprend en outre des moyens (42, 52) d'exécution d'une action en fonction desdites données temporelles de programmation.

19. Appareil selon l'une quelconque des revendications 11 à 18, **caractérisé en ce qu'**il se présente sous forme de module (40) prévu pour une fixation amovible dans une enveloppe (62).

20. Appareil selon l'une quelconque des revendications 11 à 19, **caractérisé en que** ledit élément émetteur de signaux (58) émet par un rayonnement infrarouge.

21. Appareil selon la revendication 20 prise en combinaison avec la revendication 19, **caractérisé en ce que** l'élément émetteur de signaux (58) est tourné vers une paroi (62a) de l'enveloppe (62) afin de transmettre vers cette dernière une énergie lumineuse pour réflexion vers au moins un appareil selon l'une quelconque des revendications 1 à 10.

22. Ensemble de programmation et gestion d'actions liées à un repérage dans le temps, **caractérisé en ce qu'**il comprend :
- au moins un premier appareil (2) selon l'une quelconque des revendications 1 à 10 ;
- au moins un deuxième appareil (40) selon l'une quelconque des revendications 11 à 21 ; et
- des moyens de liaison (62) permettant d'établir une liaison du premier appareil vers le deuxième appareil.

23. Ensemble selon la revendication 22, **caractérisé en ce que** ladite liaison est unidirectionnelle seulement.

24. Ensemble selon la revendication 22 ou 23, **caractérisé en ce que** le premier appareil (2) vers le deuxième appareil (40) sont logés dans une enveloppe commune (62).

25. Ensemble selon la revendication 24, **caractérisé en ce que** la liaison du premier appareil (2) vers le deuxième appareil (40) est réalisée par chemin optique, par exemple dans le spectre infrarouge, avec réflexion sur au moins une surface réfléchissante (62a) de l'enveloppe commune (62).

## Patentansprüche

1. Vorrichtung (2), welche dazu bestimmt ist, wenigstens eine Aktion, welche mit einer zeitlichen Markierung verbunden ist, durchzuführen, umfassend:
- Mittel (12, 14, 16) zum Empfangen und Speichern von zeitlichen Programmierdaten (110), welche in Form von Signalen ausgesendet werden;
- Ausführungsmittel (12, 8), welche die Umsetzung einer mit einer zeitlichen Markierung verbundenen Aktion in Abhängigkeit von diesen zeitlichen Programmierdaten erlauben;
- Mittel (12, 14, 16) zum Empfangen von in Form von Signalen ausgesendeten Synchronisationsdaten (112), welche es erlauben, eine Synchronisierung mit einer externen Zeitreferenz (43) durchzuführen; und
- Mittel zur Zeitmessung (12', 26, 36), welche von diesen Synchronisationsdaten referenziert sind und es erlauben, den Ausführungsmitteln (12, 8) eine zeitliche Markierung zu liefern;
wobei die Mittel zum Empfangen von zeitlichen Programmierdaten (110) und die Mittel zum Empfangen von Synchronisationsdaten (112) einen gemeinsamen Signalempfänger (16) umfassen;
wobei die Vorrichtung **dadurch gekennzeichnet ist, dass** sie des weiteren Mittel zum Versetzen in einen Programmiermodus umfassen, in dem die Mittel zum Empfangen und Speichern (12, 14, 16) von zeitlichen Programmierdaten (110) aktiv sind, und Mittel zum aus dem Programmiermodus setzen, in denen die Mittel zum Empfangen und Speichern von zeitlichen Programmierdaten inaktiv sind, wobei die Mittel zum Versetzen in den Programmiermodus und die Mittel zum Setzen aus diesem Programmiermodus eine Benutzerschnittstelle (22) umfassen.

2. Vorrichtung nach Anspruch 1,
**dadurch gekennzeichnet,**
**dass** sie einen Oszillator (26) umfasst, welcher gleichzeitig als Signalquelle zur Taktversorgung der Ausführungsmittel (12, 8) und als periodische Signalquelle für die Mittel zur Zeitmessung (12', 26, 36) dient.

3. Vorrichtung nach Anspruch 2,
**dadurch gekennzeichnet,**
**dass** sie Mittel (36) zum Zählen von Zyklen des periodischen Signals umfasst, welche die Berechnung der Entwicklung der Zeit in vorbestimmten Einheiten (beispielsweise Stunden und Minuten) ausgehend von zuvor gewonnenen Synchronisationsdaten erlaubt.

4. Vorrichtung nach einem der Ansprüche 1 bis 3,
**dadurch gekennzeichnet,**
**dass** die Mittel zur Zeitmessung (12', 26, 36) so konfiguriert sind, dass sie sich bei jedem Empfang von Synchronisationsdaten (112) synchronisieren.

5. Vorrichtung nach einem der Ansprüche 1 bis 4,
**dadurch gekennzeichnet,**
**dass** die Ausführungsmittel (8) Mittel zur Aktivierung und Deaktivierung von elektrischen Kontakten umfassen.

6. Vorrichtung nach Anspruch 5,
**dadurch gekennzeichnet,**
**dass** die Ausführungsmittel (8) wenigstens einen Schalter umfassen, der das Öffnen und Schließen von elektrischen Kontakten erlaubt.

7. Vorrichtung nach einem der Ansprüche 1 bis 6,
**dadurch gekennzeichnet,**
**dass** sie in Form eines Moduls (2) vorliegt, welches für eine lösbare Befestigung in einer Hülle (62) vorgesehen ist.

8. Vorrichtung nach einem der Ansprüche 1 bis 7,
**dadurch gekennzeichnet,**
**dass** der Signalempfänger (16) empfindlich für infrarote Strahlung ist.

9. Vorrichtung nach Anspruch 8 zusammen mit Anspruch 7,
**dadurch gekennzeichnet,**
**dass** das Empfangselement (16) in Richtung einer Wand (62a) der Hülle (62) gewandt ist, um eine von letzterer reflektierte Lichtenergie zu empfangen.

10. Vorrichtung nach einem der Ansprüche 1 bis 9,
**dadurch gekennzeichnet,**
**dass** sie Mittel (24) zum Darstellen einer während einer Programmierphase etablierten Identität umfasst.

11. Vorrichtung (40), welche dazu bestimmt ist, zeitliche Programmierdaten (110) und Synchronisationsdaten (112) an eine Vorrichtung (2) gemäß einem der Ansprüche 1 bis 10 zu übertragen,
**dadurch gekennzeichnet,**
**dass** sie umfasst:
- Mittel (42 bis 50) zum Eingeben von zeitlichen Programmierdaten;
- Mittel (58) zum Erstellen und Übertragen von Signalen, welche den zeitlichen Programmierdaten entsprechen;
- Mittel, welche eine Uhr (43) bilden; und
- Mittel (58) zum Erstellen und Übertragen von Signalen, die den Synchronisationsdaten entsprechen, ausgehend von Daten, welche von den eine Uhr bildenden Mitteln geliefert worden sind, wobei die Synchronisationsdaten in regelmäßigen Intervallen übertragen werden;
wobei diese Mittel zur Übertragung von Signalen, welche den zeitlichen Programmierdaten (110) entsprechen, und die Mittel zur Übertragung von Signalen, welchen den Synchronisationsdaten (112) entsprechen, einen gemeinsamen Signalsender (58) umfassen;
wobei die Vorrichtung so konfiguriert ist, dass sie über eine Auswahl mittels einer Benutzerschnittstelle (50) gemäß eines ersten Modus funktioniert, in dem sie aktiv ist, um das Eingeben von zeitlichen Programmierdaten und die Übertragung von Signalen, zu erlauben, welche den Programmierdaten (110) entsprechen, und gemäß eines zweiten Modus, in dem sie aktiv ist, um die Übertragung von Signalen zu erlauben, welche den Synchronisationsdaten (112) entsprechen.

12. Vorrichtung nach Anspruch 11,
**dadurch gekennzeichnet,**
**dass** die Mittel (42 bis 50), welche das Eingeben von zeitlichen Programmierdaten (110) erlauben, so konfiguriert sind, dass sie es erlauben, eine Aufeinanderfolge von solchen Daten in einer Kette einzuführen, wobei die Gesamtheit von diesen für eine bestimmte Vorrichtung gemäß einem der Ansprüche 1 bis 10 bestimmt ist.

13. Vorrichtung nach einem der Ansprüche 11 oder 12,
**dadurch gekennzeichnet,**
**dass** die zeitlichen Programmierdaten (110) wenigstens einen Wert umfassen, der sich auf einen Anfangsmoment einer Aktion bezieht und einen Wert, der sich auf einen Endmoment einer Aktion bezieht.

14. Vorrichtung nach einem der Ansprüche 11 bis 13,
**dadurch gekennzeichnet,**
**dass** die zeitlichen Programmierdaten und die Synchronisationsdaten in Form von Rastern (jeweils 110, 112) erstellt sind, welche gemäß einer gemeinsamen Struktur in Feldern verteilt sind.

15. Vorrichtung nach einem der Ansprüche 11 bis 14,
**dadurch gekennzeichnet,**
**dass** sie Mittel zum Speichern einer Identität einer Vorrichtung nach einem der Ansprüche 1 bis 10 umfasst, welche mit einer Programmierung verbunden sind, die dieser Vorrichtung zugeordnet ist.

16. Vorrichtung nach einem der Ansprüche 11 bis 15,
**dadurch gekennzeichnet,**
**dass** die Synchronisationsdaten instantanen Zeiteinheiten entsprechen (beispielsweise Stunde, Minuten, Sekunden).

17. Vorrichtung nach einem der Ansprüche 11 bis 16,
**dadurch gekennzeichnet,**
**dass** das Zeitintervall, welches aufeinanderfolgende Übertragungen von Synchronisationsdaten voneinander trennt, im Wesentlichen gleich einem Elementarschritt in der Auflösung der Programmierdaten ist.

18. Vorrichtung nach einem der Ansprüche 11 bis 17,
**dadurch gekennzeichnet,**
**dass** sie des weiteren Mittel (42, 52) zum Ausführen einer Aktion in Abhängigkeit von diesen zeitlichen Programmierdaten umfasst.

19. Vorrichtung nach einem der Ansprüche 11 bis 18,
**dadurch gekennzeichnet,**
**dass** sie in Form eines Moduls (40) vorliegt, welches für eine lösbare Befestigung in einer Hülle (62) vorgesehen ist.

20. Vorrichtung nach einem der Ansprüche 11 bis 19,
**dadurch gekennzeichnet,**
**dass** der Signalsender (58) über eine Infrarotstrahlung sendet.

21. Vorrichtung nach Anspruch 20 kombiniert mit Anspruch 19,
**dadurch gekennzeichnet,**
**dass** der Signalsender (58) in Richtung einer Wand (62a) der Hülle (62) gewandt ist, um in Richtung letzterer eine Lichtenergie zur Reflexion in Richtung wenigstens einer Vorrichtung nach einem der Ansprüche 1 bis 10 zu übertragen.

22. System zur Programmierung und Verwaltung von Aktionen, welche mit einer zeitlichen Markierung verbunden sind,
**dadurch gekennzeichnet,**
**dass** es umfasst:
- wenigstens eine erste Vorrichtung (2) nach einem der Ansprüche 1 bis 10;
- wenigstens eine zweite Vorrichtung (40) nach einem der Ansprüche 11 bis 21; und
- Verbindungsmittel (62), welche es erlauben, eine Verbindung der ersten Vorrichtung mit der zweiten Vorrichtung herzustellen.

23. System nach Anspruch 22,
**dadurch gekennzeichnet,**
**dass** diese Verbindung nur in eine Richtung wirksam ist.

24. System nach Anspruch 22 oder 23,
**dadurch gekennzeichnet,**
**dass** die erste Vorrichtung (2) und die zweite Vorrichtung (40) in einer gemeinsamen Hülle (62) untergebracht sind.

25. Vorrichtung nach Anspruch 24,
**dadurch gekennzeichnet,**
**dass** die Verbindung der ersten Vorrichtung (2) in Richtung der zweiten Vorrichtung (40) über einen optischen Weg realisiert ist, beispielsweise im infraroten Spektrum, mit einer Reflexion an wenigstens einer reflektierenden Oberfläche (62a) der gemeinsamen Hülle (62).

## Claims

1. A device (2) for carrying out at least one action linked to a point in time, comprising:
- means (12, 14, 16) for receiving and recording temporal programming data (110) emitted in the form of signals;
- execution means (12, 8) for carrying out an action linked to a point in time as a function of said temporal programming data;
- means (12, 14, 16) for receiving synchronization data (112), emitted in the form of signals, to establish synchronization with an external temporal reference (43); and
- time measuring means (12', 26, 36) which refers to said synchronization data to provide a point in time to said execution means (12, 8);
in which said means for receiving temporal programming data (110) and said means for receiving synchronization data (112) comprise the same signal receiving element (16);
said device being **characterized in that** it also comprises means for switching into programming mode in which the means (12, 14, 16) for receiving and recording temporal programming data (110) are active, and means for switching out of programming mode in which the means for receiving and recording temporal programming data (110) are inactive, said means for switching into programming mode and said means for switching out of programming mode comprising user interface means (22).

2. A device according to claim 1, **characterized in that** it comprises an oscillator (26) serving both as a source of timing signals for the execution means (12, 8) and as a source of a periodic signal for the time measuring means (12', 26, 36).

3. A device according to claim 2, **characterized in that** it comprises means (36) for counting the cycles of the periodic signal to calculate the change in time in predetermined units (for example hours and minutes) from previously acquired synchronization data.

4. A device according to any one of claims 1 to 3, **characterized in that** the time measuring means (12', 26, 36) are configured to synchronize each time synchronization data (112) are received.

5. A device according to any one of claims 1 to 4, **characterized in that** the execution means (8) comprise means for activating and deactivating electrical contacts.

6. A device according to claim 5, **characterized in that** the execution means (8) comprise at least one switch which can open and close electrical contacts.

7. A device according to any one of claims 1 to 6, **characterized in that** it is in the form of a module (2) provided for removable fixing in a casing (62).

8. A device according to any one of claims 1 to 7, **characterized in that** said signal receiving element (16) is sensitive to infrared radiation.

9. A device according to claim 8 in combination with claim 7, **characterized in that** the receiving element (16) is turned towards a wall (62a) of the casing (62) to receive light energy reflected thereby.

10. A device according to any one of claims 1 to 9, **characterized in that** it comprises means (24) for presenting an identity established during the programming phase.

11. A device (40) for transmitting temporal programming data (110) and synchronization data (112) to a device (2) according to any one of claims 1 to 10, **characterized in that** it comprises:
- means (42-50) for inputting temporal programming data;
- means (58) for producing and transmitting signals corresponding to the temporal programming data;
- means forming a clock (43); and
- means (58) for producing and transmitting signals corresponding to the synchronization data from data supplied by the clock means, the synchronization data being transmitted at regular intervals;
- in which said means for transmitting signals corresponding to the temporal programming data (110) and said means for transmitting signals corresponding to the synchronization data (112) comprise the same signal emitting element (58);
said device being configured to function in accordance with a first mode in which it is active to allow input of temporal programming data and transmission of signals corresponding to the programming data (110), and in accordance with a second mode in which it is active to allow transmission of signals corresponding to the synchronization data (112), selection being by means of a user interface (50).

12. A device according to claim 11, **characterized in that** the means (42-50) for inputting temporal programming data (110) are configured to allow a succession of said data to be introduced continuously, the ensemble thereof being intended for a specific device according to any one of claims 1 to 10.

13. A device according to claim 11 or claim 12, **characterized in that** the temporal programming data (110) comprise at least one datum relating to an action start time and a datum relating to an action end time.

14. A device according to any one of claims 11 to 13, **characterized in that** the temporal programming data and the synchronization data are produced in the form of frames (110, 112 respectively) distributed in fields in accordance with a common structure.

15. A device according to any one of claims 11 to 14, **characterized in that** it comprises means for memorizing an identity of a device according to any one of claims 1 to 10 associated with a programming allocated to said device.

16. A device according to any one of claims 11 to 15, **characterized in that** the synchronization data correspond to instant time units (for example hours, minutes, seconds).

17. A device according to any one of claims 11 to 16, **characterized in that** the time interval separating consecutive transmissions of the synchronization data is substantially equal to an elementary step in the resolution of the programming data.

18. A device according to any one of claims 11 to 17, **characterized in that** it also comprises means (42, 52) for executing an action as a function of said temporal programming data.

19. A device according to any one of claims 11 to 18, **characterized in that** it is in the form of a module (40) provided for removable fixing in a casing (62).

20. A device according to any one of claims 11 to 19, **characterized in that** said signal emitting element (58) emits in the infrared range.

21. A device according to claim 20 in combination with claim 19, **characterized in that** the signal emitting element (58) is turned towards a wall (62a) of the casing (62) to transmit light energy towards the casing for reflection towards at least one device according to any one of claims 1 to 10.

22. An ensemble for programming and controlling actions linked to a timing signal, **characterized in that** it comprises:
- at least one first device (2) according to any one of claims 1 to 10;
- at least one second device (40) according to any one of claims 11 to 21; and
- connection means (62) which can establish a connection of the first device with the second device.

23. An ensemble according to claim 22, **characterized in that** said connection is exclusively unidirectional.

24. An ensemble according to claim 22 or claim 23, **characterized in that** the first device (2) is housed with the second device (40) in a common casing (62).

25. An ensemble according to claim 24, **characterized in that** connection of the first device (2) with the second device (40) is made optically, for example in the infrared spectrum, with reflection via at least one reflecting surface (62a) of the common casing (62).
